# FASCICULE DE BREVET EUROPEEN

(11) **EP 3 784 882 B1**
(45) Date de publication et mention de la délivrance du brevet: **22.11.2023**
(21) Numéro de dépôt: 19717926.0
(22) Date de dépôt: 18.04.2019
(51) Int. Cl.: F02C 7/06, F02C 7/14, H01M 8/00, F01D 25/18, F01D 25/20

(54) **SYSTEME HYDRAULIQUE DE LUBRIFICATION D'UN TURBORÉACTEUR**
HYDRAULISCHES ÖLSYSTEM EINER GASTURBINE
GAS TURBINE HYDRAULIC LUBRICATION SYSTEM

(30) Priorité: 23.04.2018 BE 201805272
(43) Date de publication de la demande: 03.03.2021
(73) Titulaire: Safran Aero Boosters SA, 4041 Herstal (BE)
(72) Inventeur: CORNET, Albert, 4041 Herstal (BE); RAIMARCKERS, Nicolas, 4041 Herstal (BE)
(74) Mandataire: Lecomte & Partners
(86) Numéro de dépôt international: PCT/EP2019/060058
(87) Numéro de publication internationale: WO 2019/206795

(56) Documents cités:
- EP-A1- 2 743 477
- EP-A1- 2 801 707
- EP-A1- 3 054 256
- EP-A1- 3 239 479
- WO-A1-2018/065304
- WO-A2-2014/130103
- WO-A2-2015/050579
- KR-A- 20130 074 015

## Description

### Domaine technique

L'invention se rapporte au domaine de la lubrification d'une turbomachine. Plus précisément, l'invention concerne la gestion de l'huile dans un système pour aéronef.

### Technique antérieure

EP 2 743 477 A1 et KR 2013 0074015 A décrivent un turboréacteur pour un aéronef avec des moyens chauffants l'huile ou le carburant.

D'autres aéronefs peuvent comprendre une pile à combustible pour alimenter en électricité certains équipements de confort ou contribuer à des économies de carburant en complétant les besoins des turboréacteurs. La pile à combustible, généralement intégrée au fuselage, dispose de son circuit d'huile propre pour maintenir en température l'empilement d'électrodes, dit « stack ». Cette huile permet de maintenir la pile à combustible à une température de fonctionnement optimal, par exemple entre 20°C et 150°C. Cependant, à trop basse température l'huile peut se figer et la pompe ne peut pas la faire circuler, empêchant ainsi le démarrage de la pile à combustible en toute sécurité. Ainsi, certaines pompes sont surdimensionnées afin de forcer le pompage de l'huile ainsi figée. Ceci signifie une pompe plus lourde et des contraintes mécaniques plus sévères appliquées aux organes (conduits, vannes, etc.) du circuit hydraulique. Une autre option est d'adjoindre à la pile à combustible un système de chauffage de l'huile dédié.

De l'autre côté du spectre, certaines huiles fonctionnant à hautes températures (au-dessus de 200°C) permettent un bon rendement des échangeurs de chaleur, et donc des échangeurs plus petits. Ces huiles comprennent des additifs qui les rendent agressives chimiquement pour le circuit hydraulique. Il est donc difficile de contrebalancer le poids du système de chauffage ou de la pompe surdimensionnée en gagnant du poids sur les échangeurs de chaleur.

De son côté, le turboréacteur de l'aéronef comprend également un circuit hydraulique notamment pour lubrifier les parties mobiles afin de limiter leurs usures. Dans certains cas, elle est employée pour refroidir certaines pièces mécaniques ; ce qui porte sa température au-delà de 200°C. En complément, lorsqu'elle concourt au dégivrage des entrées du compresseur et de la nacelle, elle est exposée à des températures inférieures à -40°C, ce qui impose d'augmenter sa plage de température. Accessoirement, lorsqu'elle est pression, cette huile peut aussi être employée pour l'actionnement d'un vérin. Enfin, elle contribue à la surveillance de l'usure car elle charrie les particules relâchées par les pièces mobiles et qui peuvent être captées par des éléments magnétiques.

Dans un aéronef muni d'un turboréacteur et d'une pile à combustible, il y a donc deux circuits hydrauliques distincts, chacun étant particulièrement encombrant et lourd. Il y a également des besoins de chauffage de l'huile d'une part et de refroidissement de l'huile d'autre part. Ceci représente de nombreuses pièces, parfois redondantes et résulte en un ensemble hydraulique qui est encombrant, cher et lourd.

### Résumé de l'invention

### Problème technique

L'invention a pour objectif de résoudre au moins un des problèmes posés par l'art antérieur. Plus précisément, l'invention a pour objectif d'optimiser la lubrification d'un aéronef et en particulier de résoudre le problème posé par l'huile figée à basse température. L'invention a également pour objectif de proposer une solution compacte, simple, légère, économique, fiable, facile à produire, et commode d'entretien.

### Solution technique

L'invention a pour objet un système pour un aéronef, selon la revendication 1, comprenant : un turboréacteur muni d'un circuit hydraulique de lubrification et/ou une pile à combustible munie d'un circuit hydraulique de mise et maintien en température de fonctionnement ; remarquable en ce qu'au moins l'un des circuits comprend une pompe électrique de circulation d'huile intégrant un élément chauffant pour chauffer l'huile.

Un tel système permet de monter l'huile en température pour l'alimenter à la pile à combustible sans que l'huile ne se fige.

Le circuit hydraulique de lubrification du turboréacteur permet de lubrifier et refroidir les organes mécaniques tels que les paliers, la boite d'engrenage ou les équipements électriques.

La pile à combustible, souvent prévue pour être dans l'aéronef, et donc distante du turboréacteur comprend un circuit hydraulique de mise et maintien en température de fonctionnement.

Les éléments chauffants de la pompe électrique peuvent être des éléments qui chauffent du chef de l'actionnement de la pompe ou de la proximité de la pompe avec des éléments chauds (paroi thermiquement conductrice), ou peuvent être des éléments qui, à partir d'une source d'énergie externe, montent en température (résistance, bobine).

La solution de l'invention consiste donc en l'intégration de plusieurs fonctions (pompage, échange de chaleur, régulation de pression) afin de minimiser le poids et l'encombrement du système hydraulique dans son ensemble.

Selon des modes avantageux de l'invention, le système peut comprendre une ou plusieurs des caractéristiques suivantes, prises isolément ou selon toutes les combinaisons techniques possibles :
- le système comprend le turboréacteur et la pile à combustible, le circuit de lubrification du turboréacteur et le circuit de mise et maintien en température de la pile à combustible formant un seul et même circuit. Ainsi, les deux circuits peuvent partager au moins un réservoir commun, et l'huile qui est refroidie ou réchauffée dans le turboréacteur peut circuler au contact de la pile à combustible pour en refroidir ou en réchauffer la température ;
- la pompe électrique comprend un moteur électrique muni d'une bobine et la bobine est alimentée en courant continu afin de la faire chauffer, le courant continu étant préférablement au-dessus de la valeur nominale de fonctionnement de la bobine ;
- la pompe comprend un corps et l'élément chauffant est une résistance électrique noyée dans le corps de la pompe pour être en contact direct avec l'huile ;
- la pompe comprend un corps et l'élément chauffant est le corps de la pompe qui est fait en matériau conducteur thermique et contient au moins l'un des éléments suivants : aluminium, argent, cuivre, zinc. Le corps peut être composé d'un alliage de l'un ou plusieurs de ces éléments. Ainsi, l'huile peut être réchauffée par simple conduction du corps de la pompe car la pompe est positionnée à proximité d'une source de chaleur. La source de chaleur peut être un module électrique du turboréacteur, ou un organe mécanique de celui-ci, par exemple ;
- le circuit qui comprend la pompe comprend également un réservoir pour l'huile, la pompe étant intégrée ou au contact direct du réservoir, de sorte que ses éléments chauffants chauffent l'huile qui est dans le réservoir. Le réservoir peut être pourvu d'un désaérateur ;
- le circuit comprend un groupe de lubrification positionné thermiquement au contact du réservoir. Un groupe de lubrification peut comprendre plusieurs pompes, capteurs de températures, pression ou débit, une fonction de récupération par enceinte, et le contrôle électronique associé. Par « contact thermique », on entend que le groupe de lubrification peut être accolé au réservoir pour lui transmettre de l'énergie par conduction thermique ;
- le réservoir, la pompe et l'élément chauffant, ainsi qu'éventuellement le groupe de lubrification, composent un ensemble modulaire enveloppé d'un carter. Il est donc possible de cartériser complètement le réservoir, la pompe et l'élément chauffant, sous forme d'un module dont seuls des connecteurs d'entrée et de sortie d'huile sont accessibles lors du montage du turboréacteur ;
- le carter est de forme apte à être introduite dans une cavité d'une aile d'aéronef. Alternativement, le carter de ce module peut être courbe ou en portion annulaire pour être introduit dans le turboréacteur ;
- au moins un des circuits comprend un dispositif de chauffe par induction d'une cavité contenant de l'huile. Le dispositif de chauffe par induction peut être une bobine à proximité et/ou entourant le réservoir dont les parois sont ferromagnétiques ;
- le circuit de lubrification du turboréacteur comprend une portion qui forme un échangeur avec l'air du « bleed » du turboréacteur pour réchauffer l'huile. Cet air chaud qui peut être évacué en sortie de compresseur et avant la chambre de combustion permet en effet de réchauffer l'huile ;
- le circuit de lubrification du turboréacteur comprend une portion qui forme un échangeur avec l'air ambiant ou l'air by-pass du turboréacteur pour refroidir l'huile ;
- le circuit comprend des vannes et des pompes et un système d'actionnement des vannes et pompes pour faire circuler l'huile dans l'un et/ou l'autre des échangeurs en fonction d'une température d'huile mesurée et d'une température d'huile cible. Si la température est supérieure à la plage de valeur optimale, l'huile sera conduite dans l'échangeur de refroidissement du by-pass. Si la température est inférieure à la plage cible, elle sera conduite dans l'échangeur du bleed air.

L'invention a également trait à un procédé de gestion de l'huile dans un système, selon la revendication 11, tel que décrit plus haut.

Selon ce procédé, la température de l'huile est mesurée et l'huile est réchauffée si sa température est en-dessous d'une première température seuil, notamment 20°C.

Selon un mode avantageux du procédé, le besoin en énergie de l'aéronef ou du turboréacteur est évalué, et l'huile n'est réchauffée que si le besoin en énergie de l'aéronef est tel que la pile à combustible doit être mise en fonctionnement.

Selon un mode avantageux, l'huile est refroidie si sa température est au-dessus d'une seconde température seuil, notamment 150°C.

Selon un mode avantageux, la pompe électrique comprend un moteur électrique muni d'une bobine et la bobine est alimentée en courant continu afin de la faire chauffer, le courant continu étant préférablement au-dessus de la valeur nominale de fonctionnement de la bobine.

Selon un mode avantageux, la bobine est alimentée avec un courant maintenu entre 110 et 150% de sa valeur nominale tant que l'huile est en-dessous de la première valeur seuil. Cette plage de valeur permet de générer de la chaleur sans endommager la pompe.

Selon un mode avantageux, le système comprend un circuit électrique d'alimentation de la pompe qui est tel que la pompe électrique soit alimentée exclusivement par la pile à combustible, lorsque celle-ci est en fonctionnement.

Un tel circuit électrique peut comprendre des interrupteurs commandés pour sélectionner la source d'alimentation électrique de la pompe. Lorsque la pile à combustible est éteinte, il convient naturellement d'alimenter la pompe électrique par d'autres moyens auxiliaires.

Le problème que pose l'huile froide qui se fige dans le circuit hydraulique est également résolu par un échangeur de chaleur air/huile pour turbomachine comprenant une matrice et des éléments chauffants, la matrice comprenant : une traversée pour l'écoulement de l'air ; un réseau dans lequel circule l'huile et qui supporte au moins deux ailettes de refroidissement successives selon l'écoulement de l'air ; la matrice comprenant en outre des logements pour accueillir lesdits éléments chauffants.

En effet, le fait d'introduire les éléments chauffants directement dans la matrice de l'échangeur de chaleur est une solution compacte et peu onéreuse pour s'assurer du bon fonctionnement du circuit hydraulique lorsque l'huile est froide. Selon des modes avantageux de l'invention, le système peut comprendre une ou plusieurs des caractéristiques suivantes, prises isolément ou selon toutes les combinaisons techniques possibles :
- les ailettes s'étendent suivant des directions principales inclinées l'une par rapport à l'autre ;
- les logements comprennent une paroi qui coopère avec l'huile se trouvant dans le réseau ;
- les logements sont de forme tubulaire droite ou en zig-zag ;
- les éléments chauffants sont des crayons chauffants, des résistances électriques, et/ou des films chauffants.

Il est également décrit ici une turbomachine, notamment un turboréacteur comprenant un échangeur de chaleur avec une matrice, des paliers, et une boite d'engrenage entrainant une soufflante, remarquable en ce que l'échangeur est conforme à l'un des modes de réalisation exposés ci-dessus.

Selon des modes particuliers de réalisation, la matrice peut comprendre une ou plusieurs des caractéristiques suivantes, prises isolément ou selon toutes les combinaisons techniques possibles :
- les directions principales des ailettes successives sont inclinées l'une par rapport à l'autre d'au moins 10°, ou d'au moins 45° ;
- l'air s'écoule au travers de la matrice selon un sens général d'écoulement ; entre les deux ailettes successives la matrice comprend un passage orienté transversalement par rapport audit sens général ;
- les ailettes successives forment des croix successives selon l'écoulement de l'air, lesdites croix successives étant éventuellement pivotées l'une par rapport à l'autre ;
- la matrice comprend plusieurs jeux d'ailettes successives disposées selon plusieurs plans successifs suivant l'écoulement de l'air, lesdits plans étant éventuellement parallèles ;
- les ailettes successives s'étendent depuis une zone du réseau, en projection contre un plan perpendiculaire à l'écoulement de l'air, les ailettes successives se coupent à distance de ladite zone du réseau ;
- les ailettes successives sont jointives, ou écartées l'une de l'autre selon la direction d'écoulement de l'air ;
- le réseau comprend une pluralité de tubes, éventuellement parallèles ;
- les tubes présentent des profils en ellipse, en goutte d'eau, ou en losange ;
- le réseau comprend une paroi séparant l'air de l'huile, les ailettes successives s'étendant depuis ladite paroi ;
- le réseau comprend un maillage ;
- le maillage est profilé selon la direction d'écoulement de l'air ;
- le maillage définit des canaux pour l'écoulement de l'air, les canaux étant éventuellement de section quadrangulaire ;
- la matrice est adaptée pour un échange de chaleur entre un liquide et un gaz, notamment un flux gazeux traversant un turboréacteur ;
- les ailettes successives comprennent des tronçons principaux selon lesquels les directions principales sont agencées, les directions principales des tronçons principaux étant inclinées l'une par rapport à l'autre ;
- les directions principales sont inclinées l'une par rapport à l'autre d'au moins 5°, ou d'au moins 20°, ou de 90° ;
- les ailettes successives comprennent des jonctions sur le réseau qui sont décalées transversalement par rapport à l'écoulement de l'air ;
- les tubes décrivent au moins un alignement ou au moins deux alignements, notamment transversalement par rapport à l'écoulement de l'air.
- les deux ailettes successives relient des tubes voisins, éventuellement en se croisant dans l'espace entre lesdits tubes ;
- chaque ailette est pleine, et/ou forme une plaquette plane ;
- chaque ailette comprend deux extrémités opposées qui sont jointes au réseau ;
- l'épaisseur des ailettes successives est comprise entre 0,10 mm et 0,50 mm ; ou entre 0,30 mm et 0,40 mm ; et ou inférieure à l'épaisseur de la cloison ;
- les ailettes successives décrivent au moins un entrecroisement, préférentiellement plusieurs entrecroisements ;
- les entrecroisements sont écartés les uns des autres, ou présentent une continuité de matière, selon l'écoulement de l'air ;
- les tubes sont écartés selon l'écoulement de l'air et/ou transversalement à l'écoulement de l'air ;
- le maillage s'étend sur toute la longueur et/ou toute la largeur et/ou toute la hauteur de la matrice ;
- le réseau comprend des protubérances internes en contact de l'huile ;
- la matrice comprend un passage hélicoïdal formé entre les ailettes, éventuellement plusieurs passages hélicoïdaux coaxiaux qui sont formés entre les ailettes. Optionnellement les passages hélicoïdaux coaxiaux présentent un même pas, et/ou un même rayon.

Selon un mode avantageux de l'invention, l'échangeur de chaleur présente une forme générale arquée ; les tubes étant éventuellement orientés radialement.

Il est également décrit ici un procédé de réalisation d'une matrice d'échangeur de chaleur entre l'air et l'huile, la matrice comprenant : une traversée pour l'écoulement de l'air ; un réseau s'étendant dans la traversée et dans lequel circule l'huile ; le procédé comprenant les étapes suivantes : (a) conception de l'échangeur de chaleur avec sa matrice ; (b) réalisation de la matrice par fabrication additive suivant une direction d'impression ; remarquable en ce que l'étape (b) réalisation comprend la réalisation d'ailettes s'étendant selon des directions principales qui sont inclinées par rapport à la direction d'impression.

Selon un mode avantageux de l'invention, les ailettes sont disposées dans des plans inclinées par rapport à la direction d'impression d'un angle β compris entre 20° et 60°, éventuellement compris entre 30° et 50°.

Selon un mode avantageux de l'invention, l'étape (b) réalisation comprend la réalisation de tubes inclinés par rapport à la direction d'impression d'un angle compris entre 20° et 60°, éventuellement compris entre 30° et 50°.

Selon un mode avantageux de l'invention, l'étape (b) réalisation comprend la réalisation de logements présentant des parois qui coopèrent avec l'espace intérieur des tubes.

De manière générale, les modes avantageux de chaque objet de l'invention sont également applicables aux autres objets de l'invention. Chaque objet de l'invention est combinable aux autres objets, et les objets de l'invention sont également combinables aux modes de réalisation de la description, qui en plus sont combinables entre eux, selon toutes les combinaisons techniques possibles, à moins que le contraire ne soit explicitement mentionné. En particulier, les modes de chauffage ou refroidissement de l'huile peuvent être multiples et ils peuvent être commandés indépendamment et parcourus par l'huile ou shuntés, grâce à des vannes et des moyens de contrôle prévus à cet effet. Certains modes de chauffage ou de refroidissement pouvant être plus efficients que d'autres, selon la différence entre la température mesurée et la température cible, l'actionnement de certains dispositifs sera privilégié.

### Avantages apportés

L'intégration de la fonction de chauffe à la pompe permet de minimiser l'encombrement de l'ensemble hydraulique. Selon le fonctionnement de la pile à combustible, il peut être nécessaire de refroidir ou réchauffer l'huile, ce qui peut être fait à l'aide de l'air ambiant (froid) ou de certains organes du turboréacteur (chaud). Un système de chauffe dédié à la pile à combustible n'est donc plus nécessaire.

### Brève description des dessins

La figure 1 représente un système selon l'invention ;
La figure 2 illustre un réservoir pour un système selon l'invention ;
La figure 3 montre une pompe électrique pour un système selon l'invention.
La figure 4 esquisse une vue de face d'un échangeur de chaleur.
La figure 5 illustre une vue de face d'une matrice de l'échangeur de chaleur selon un premier mode de réalisation .
La figure 6 est une vue isométrique d'un échangeur de chaleur.
La figure 7 est une coupe de la matrice suivant l'axe 7-7 tracé sur la figure 5.
La figure 8 illustre une vue de face d'une matrice d'échangeur de chaleur selon un deuxième mode de réalisation.
La figure 9 représente un agrandissement d'un canal type de la figure 8.
La figure 10 est une coupe de la matrice du deuxième mode de réalisation suivant l'axe 10-10 tracé sur la figure 8.
La figure 11 est un diagramme du procédé de réalisation d'une matrice d'échangeur de chaleur.

### Description des modes de réalisation

Dans la description qui va suivre, les termes « interne » et « externe » renvoient à un positionnement par rapport à l'axe de rotation d'une turbomachine axiale. La direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine.

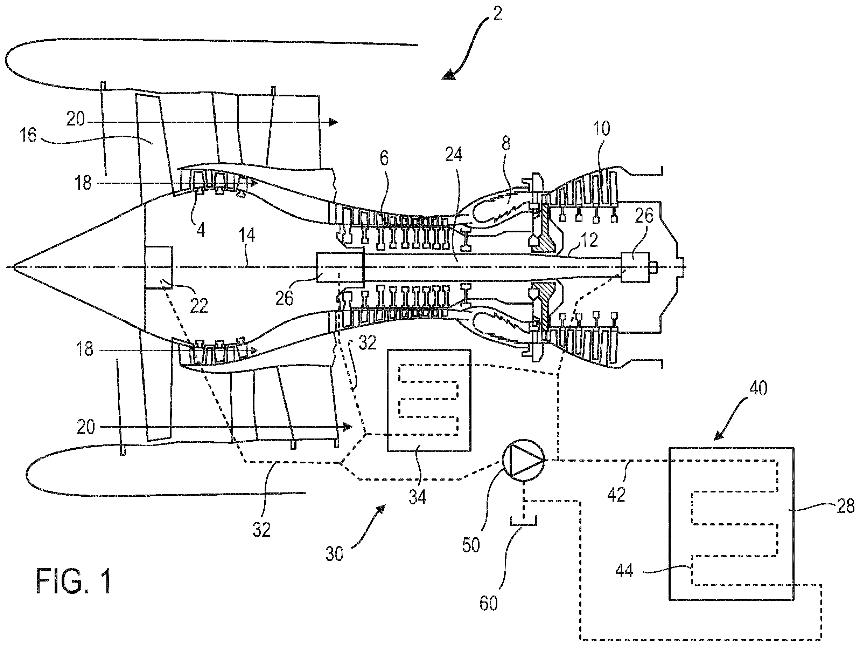

La figure 1 représente de manière simplifiée une turbomachine axiale 2. Il s'agit ici d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise au rotor 12 met en mouvement les deux compresseurs 4 et 6. Ces derniers comportent plusieurs rangées d'aubes de rotor associées à des rangées d'aubes de stator. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné fan ou soufflante 16 est couplé au rotor 12 et génère un flux d'air qui se divise en un flux primaire 18 traversant les différents niveaux susmentionnés de la turbomachine, et en un flux secondaire 20 traversant un conduit annulaire (partiellement représenté) le long de la machine pour ensuite rejoindre le flux primaire en sortie de turbine.

Des moyens de démultiplication, tel un réducteur épicycloïdal 22, peuvent réduire la vitesse de rotation de la soufflante et/ou du compresseur basse-pression par rapport à la turbine associée. Le flux secondaire peut être accéléré de sorte à générer une réaction de poussée nécessaire au vol d'un avion. Les flux primaire 18 et secondaire 20 sont des flux annulaires coaxiaux et emmanchés l'un dans l'autre. Ils sont canalisés par le carter de la turbomachine et/ou des viroles.

Le rotor 12 comprend un arbre de transmission 24 monté sur le carter au moyen de deux paliers 26.

La figure 1 montre également de manière très schématique une pile à combustible 28. Celle-ci permet l'alimentation en électricité de certains organes du moteur ou d'équipements auxiliaires de l'aéronef.

Afin de lubrifier les éléments tournants du turboréacteur 2, un circuit de lubrification 30 est prévu. Ce circuit 30 comprend des conduits 32 pour transporter l'huile aux organes du turboréacteur la nécessitant, comme notamment la boite d'engrenage 22 et les paliers 26. Un échangeur à chaleur 34 peut être prévu pour réguler la température de l'huile dans le circuit 30. L'échangeur 34 peut être positionné dans le flux secondaire 20 pour refroidir l'huile. Alternativement, ou en complément, un échangeur 34 peut aussi être prévu en aval des vannes de bleed, pour réchauffer l'huile. Lorsque les deux types d'échangeur (froid et chaud) sont prévus, des vannes et un système de contrôle adéquat permettent de faire passer l'huile plutôt dans un des échangeurs que dans l'autre, afin de maintenir l'huile à une température voulue. En adaptant le débit ou le temps de passage dans l'un et/ou l'autre des échangeurs, la température peut être régulée de manière précise.

Le système comprend également un circuit hydraulique 40. Celui-ci permet d'assurer un bon fonctionnement de la pile à combustible 28. Des conduits 42 et un échangeur à chaleur 44 permettent de convoyer l'huile jusqu'à la pile à combustible 28.

Les deux circuits 30, 40 peuvent ne former qu'un seul circuit hydraulique commun. Ainsi, l'huile une même peut parcourir les deux circuits. Un réservoir 60 commun aux deux circuits et au moins une pompe 50 viennent assurer un débit d'huile dans les deux circuits.

Il est entendu que les circuits comprennent tous les organes permettant de contrôler la température, la pression et le débit pour obtenir un fonctionnement optimal de la pile à combustible 28 et du turboréacteur 2 (capteurs, vannes, surpresseur, réducteur de débit, etc.).

Le réservoir 60 peut être fixé à la nacelle de la turbomachine 2, ou à un carter de compresseur. Il est optionnellement fixé à un carter intermédiaire. Le réservoir 60 peut être placé entre deux parois annulaires guidant des flux concentriques ; par exemple le flux secondaire 20 et le flux entourant la turbomachine 2, ou entre le flux primaire 18 et le flux secondaire 20. Afin d'augmenter son volume utile, le réservoir 60 est essentiellement allongé tout en suivant une forme générale courbe. Cette courbure permet une implantation entre deux cloisons courbes et rapprochées. Le réservoir 60 peut notamment être à proximité d'une source chaude, sa température peut atteindre 100°C.

Pour éviter que l'huile ne se fige à cause des faibles températures, celle-ci peut être chauffée, par l'échangeur 34 ou par des éléments chauffants de la pompe 50.

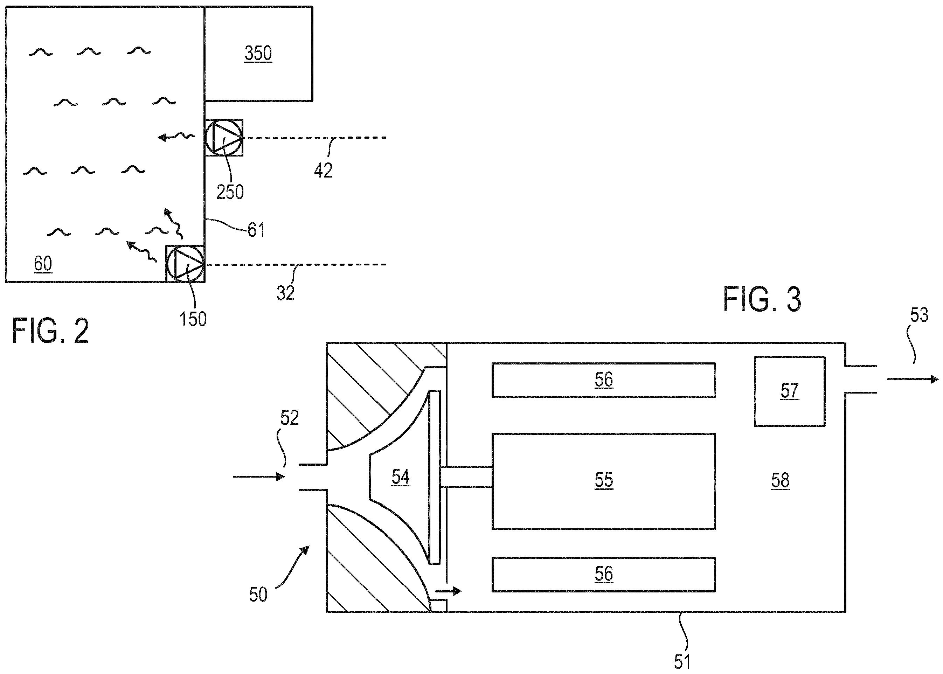

Les éléments chauffants de la pompe 50 peuvent être un résistance électrique noyée dans la pompe, la bobine de la pompe alimentée en courant continu supérieur à la valeur nominale, ou des surfaces de contact du corps de pompe avec l'huile qui sont thermiquement conductrices (voir figure 3).

La figure 2 représente un sous-ensemble du circuit hydraulique. Deux pompes 150, 250 sont représentées pour illustrer des exemples de positions possibles des pompes. La pompe 150 est directement intégrée au réservoir 60. Par conduction dans le réservoir (voir les flèches de la figure 2), l'huile peut être réchauffée depuis l'élément chauffant de la pompe 150. La pompe 250 est placée directement au contact d'une paroi thermiquement conductrice 61 du réservoir 60. La pompe 250 peut par exemple être également au contact d'un dispositif qui dégage de la chaleur (carte électronique, organe mécanique, etc.) et ainsi servir de pont thermique pour apporter de la chaleur à l'huile qui se trouve dans le réservoir 60.

Le sous-ensemble peut également contenir un groupe de lubrification 350. Celui-ci consiste en un module pouvant comprendre une ou plusieurs pompes, un ou plusieurs capteurs, une électronique de contrôle, etc. La chaleur dégagée par les différents composants du groupe de lubrification 350 peut être transmise à l'huile du réservoir via la paroi thermiquement conductrice 61.

La figure 3 représente un exemple schématique d'une pompe électrique 50. La pompe comprend un corps 51 dont les parois peuvent être en matériau thermiquement conducteur. L'huile est aspirée par l'entrée 52 et est refoulée par la sortie 53. Un impulseur 54 (roue à aubes) tourne pour aspirer l'huile. L'impulseur est solidaire d'un rotor 55 entraîné en rotation par le champs électromagnétique créé par un stator 56.

La pompe peut disposer d'éléments chauffants 57 sous la forme de module(s) de chauffage qui peuvent comprendre des résistances ou tout autre dispositif de chauffe.

Les éléments chauffants 57 sont disposés dans une cavité 58 de la pompe qui est parcourue par l'huile.

L'huile peut aussi venir au contact des spires du stator 56 qui, lorsqu'elles sont alimentées en courant continu supérieur à la valeur nominale de fonctionnement, dégagent de la chaleur.

La pompe 50 peut comprendre tous les moyens appropriés à son bon fonctionnement (capteurs, vannes de surpression, de purge, etc.).

La pompe 50 n'est qu'une illustration schématique d'une pompe électrique qui peut être utilisée dans le système selon l'invention. L'homme du métier saurait adapter l'enseignement de la figure 3 à différents types ou formes de pompe.

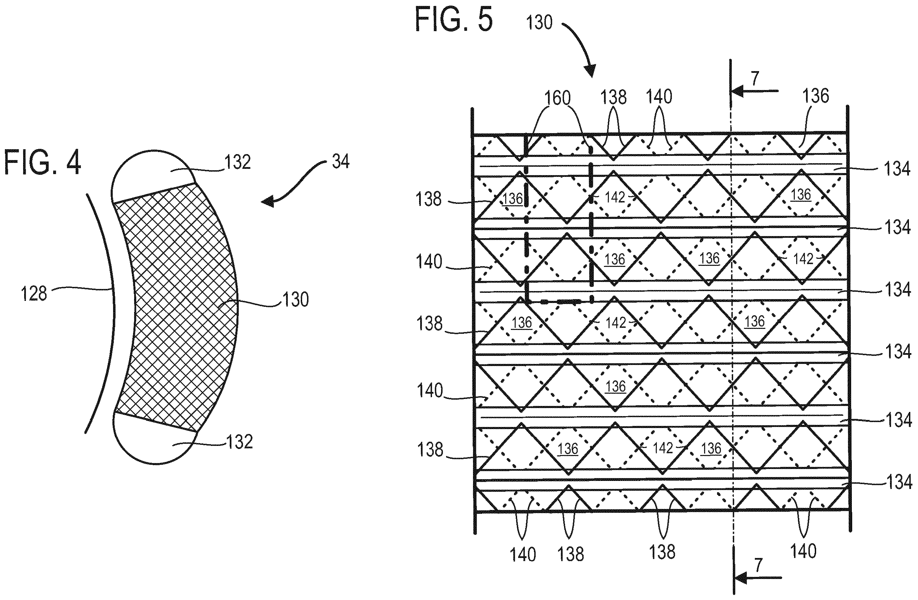

La figure 4 montre une vue en plan d'un échangeur de chaleur 34 tel que celui représenté en figure 1. L'échangeur de chaleur 34 présente une forme générale arquée. Il épouse un carter annulaire 128 de la turbomachine. Il est traversé par l'air du flux secondaire, et accueille de l'huile. Il comporte une matrice 130 disposée entre deux collecteurs 132 fermant ses extrémités et collectant l'huile. L'échangeur peut être mixte et comprendre à la fois les deux types de matrices décrites ci-après.

La figure 5 esquisse une vue de face d'une matrice 130 d'échangeur de chaleur selon le premier mode de réalisation. La matrice 130 peut correspondre à celle représentée en figure 4.

La matrice 130 présente une traversée permettant à l'air de s'écouler de part en part de la matrice 130. L'écoulement de l'air peut s'effectuer selon un sens général, perpendiculairement à la figure. La traversée peut généralement former un couloir ; éventuellement de contour externe variable. Afin de permettre l'échange de chaleur, un réseau recevant l'huile est disposé dans la traversée. Le réseau peut comprendre une série de tubes 134. Les différents tubes 134 peuvent ménager des passages 136 entre eux. De manière à accroitre l'échange thermique, les tubes 134 supportent des ailettes 138, 140. Ces ailettes 138, 140 peuvent être placées à la suite l'une de l'autre selon l'écoulement de l'air, si bien qu'elles forment des ailettes successives selon cet écoulement. La concentration en ailettes dans la matrice 130 peut varier. Dans la présente matrice 130, on représente une première succession avec des ailettes avant 138 (représentées en traits pleins), et des ailettes arrière 140 (représentées en traits pointillés). Les ailettes avant 138 sont placées dans un plan avant, et les ailettes arrière 140 sont placées en arrière-plan.

Les ailettes 138, 140 sont décalées d'un plan à l'autre. Par décalage on entend une variation d'inclinaison, et/ou un écart transversalement à l'écoulement de l'air. Par exemple, deux ailettes successives 138, 140 peuvent chacune s'étendre dans l'air selon une direction principale propre. Ces directions principales peuvent être inclinées l'une par rapport à l'autre, notamment inclinées de 90°. De face, les ailettes successives 138, 140 dessinent des croix, par exemple des séries de croix reliant les tubes 134. Puisque les ailettes 138, 140 sont inclinées par rapport aux tubes 134, elles forment des triangulations, ou des jambes de force.

Les intersections 142 dans l'espace des ailettes successives 138, 140 est à distance des tubes 134, éventuellement à mi-distance entre deux tubes 134 successifs. Cette position centrale des intersections 142 évite d'amplifier les pertes dans les couches limites.

La figure 5 montre également en trait mixte un logement 160. Pour ne pas surcharger la figure, seul un logement 160 est représenté. Il se présente dans cet exemple sous une forme tubulaire. Le logement peut s'étendre sur toute la hauteur de la matrice ou sur une partie de sa hauteur seulement. Le logement 160 est prévu pour accueillir des éléments chauffants afin de réchauffer l'huile qui se trouve dans les tubes 134.

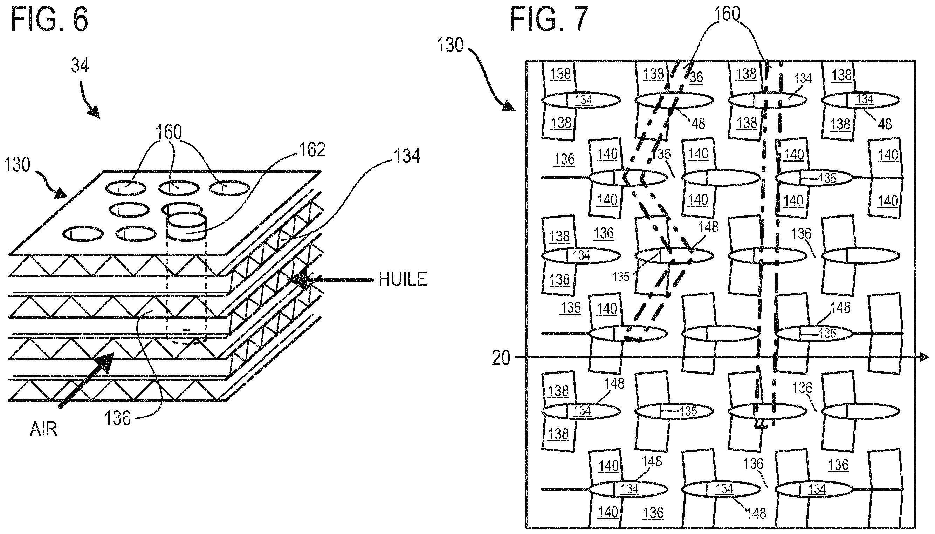

La matrice étant réalisée par fabrication additive, il n'y a aucune restriction sur la forme tubulaire du logement 160 comme illustré en figure 7.

La figure 6 est une vue isométrique schématique d'une portion de la matrice 130. On y observe les flux croisés de l'air et de l'huile, pénétrant respectivement dans les couloirs 136 et les tubes 134 (schématiquement représentés). Des logements 160 sont représentés, coaxiaux, sur une face supérieure de la matrice. L'invention n'est pas limitée à ce mode de réalisation et l'homme du métier adapterait la position, la forme et l'orientation des logements en fonction des besoins en chauffage de l'huile ou de la conception globale des éléments environnant l'échangeur. Les logements 160 peuvent être disposés en réseau, par exemple en quinconce. Des crayons chauffants 162 (dont l'un est représenté sur la figure 6) sont positionnés dans les logements 160.

La figure 7 est une coupe suivant l'axe 7-7 tracé sur la figure 5. Etant vues en coupe depuis des intersections, les ailettes 138, 140 sont visibles par moitiés.

Plusieurs successions d'ailettes 138, 140 sont représentées les unes derrière les autres le long du flux secondaire 20. Les ailettes 138, 140 s'étendent depuis les cloisons 148 formant les tubes 134. Elles peuvent former des languettes plates. Comme il est apparent ici, les tubes 134 sont agencés en quinconce dans la coupe et alignés suivant le flux d'air secondaire 20. Les cloisons 148 des tubes 134 forment la structure de la matrice 130, l'échange thermique s'opérant au travers de leurs épaisseurs. En outre, les tubes 134 peuvent être cloisonnés par une paroi interne 135, ce qui augmente leur rigidité. En option, l'intérieur des tubes est agrémenté d'obstacles (non représentées) pour générer des remous dans l'huile afin d'augmenter l'échange thermique.

Les ailettes 138, 140 des différents plans d'ailettes peuvent être à distance des autres ailettes, ce qui réduit la masse et l'occupation de la traversée. Les ailettes avant 138, 140 peuvent joindre les tubes amont, et les ailettes arrière 140 rejoignent les tubes disposés en aval. Cette configuration permet de relier les tubes 134 les uns aux autres, tout en permettant le passage de l'air dans les passages 136 les séparant.

Les tubes 134 peuvent présenter des profils arrondis, par exemple en ellipses. Ils sont amincis transversalement à l'écoulement de l'air pour réduire les pertes de charges, et donc augmenter le débit possible. Les tubes 134 placés dans le prolongement les uns des autres selon l'écoulement de l'air sont séparés par les passages 136. De même, d'autres passages 136 séparent les tubes superposés. Puisque ces passages 136 communiquent les uns avec les autres, la matrice devient traversante et l'écoulement de l'air peut circuler en ligne droite tout comme en diagonale par rapport au flux secondaire 20.

Deux exemples de mode de réalisation des logements 160 sont illustrés. Ils peuvent relier les tubes 134 en zig-zag ou en ligne droite. La fabrication additive permet d'obtenir toutes sortes de géométries et lorsque les logements 160 sont en zig-zag, des éléments chauffants flexibles peuvent être prévus pour y être installés. Certaines portions des éléments chauffants peuvent aussi être introduits dans les logements en cours de fabrication.

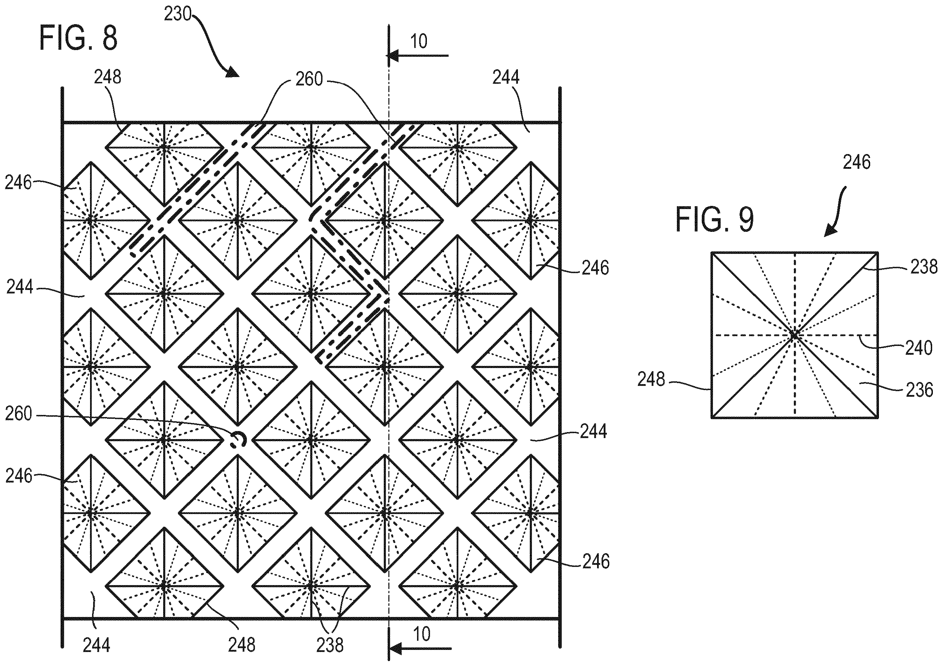

La figure 8 représente une matrice 230 d'échangeur de chaleur selon un deuxième mode de réalisation. Cette figure 8 reprend la numérotation des figures précédentes pour les éléments identiques ou similaires, la numération étant toutefois incrémentée de 100. Des numéros spécifiques sont utilisés pour les éléments spécifiques à ce mode de réalisation.

La matrice 230 est représentée de face telle que la rencontre l'écoulement de l'air lorsqu'il pénètre la traversée. Le réseau forme un maillage 244, par exemple avec des voies reliées les unes aux autres en formant des polygones. Le maillage 244 peut éventuellement former des carrés. Les mailles du maillage 244 peuvent entourer des canaux 246 dans lesquels circule l'air. Ces canaux 246 peuvent être séparés les uns des autres par le maillage 244. Le réseau comporte une cloison 248 qui marque la séparation entre l'air et l'huile. L'échange thermique s'effectue au travers de cette cloison 248. Elle forme également la structure de la matrice 230. A l'intérieur, les canaux 246 sont barrés par des d'ailettes successives 238, 240, préférentiellement par plusieurs séries d'ailettes successives.

Trois exemples de mode de réalisation des logements 260 sont représentés. Ceux-ci, sous forme tubulaire pour recevoir les éléments chauffants, sont prévus à l'intérieur des passages d'huile 244, afin de ne pas perturber le flux d'air dans les passages 236. Comme pour la figure 7, les logements 260 peuvent être linéaires ou en zig-zag. Les logements 260 peuvent être transversaux (cercle en trait mixte sur la figure 8).

La figure 9 montre un agrandissement d'un canal 246 représentatif de ceux qui sont représentés en figure 8.

Les ailettes 238, 240 sont implantées sur la cloison 248. Elles peuvent en relier les faces opposées. Les ailettes 238, 240 peuvent former des croix, par exemple par réunion de deux ailettes coplanaires et sécantes. En outre, l'ensemble des ailettes 238, 240 peut former une enfilade de croix successives. Les différentes croix sont pivotées les unes par rapport aux autres afin d'optimiser l'échange de chaleur tout en limitant les pertes de charges. Par exemple, chaque croix est pivotée de 22,5° par rapport à sa croix en amont. Un motif à quatre croix pivotées régulièrement peut être répété. Eventuellement, les croix forment des passages 236 hélicoïdaux à l'intérieur des canaux 246, par exemple quatre passages 236 hélicoïdaux enroulés les uns autour des autres. Les canaux 246 peuvent être droits ou torsadés.

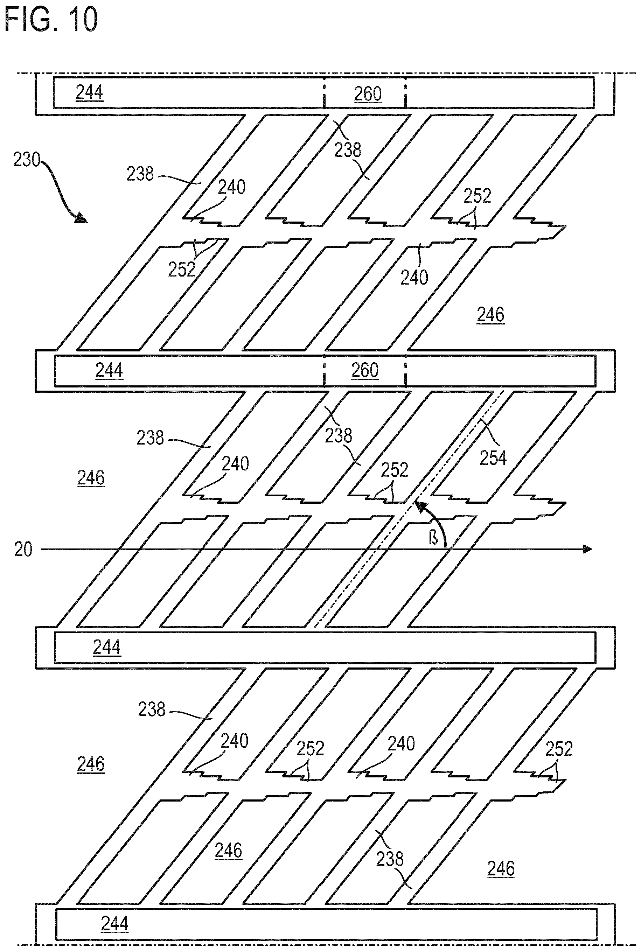

La figure 10 est une coupe partielle suivant l'axe 10-10 tracé sur la figure 8. Trois canaux 246 sont représentés, tout comme quatre portions de maillage 244 dans lesquels circule l'huile.

Les ailettes 238, 240 et donc les croix qu'elles forment apparaissent en coupe. Les ailettes avant 238 sont visibles sur toute leurs longueurs tandis que les ailettes arrière 240 ne sont que partiellement visibles puisqu'elles restent en coupe. Les croix suivantes sont également partiellement représentées via leurs moyeux 252 de croisement de leurs ailettes.

Les croix sont formées dans des plans. Ces plans sont parallèles les uns aux autres, et inclinés par rapport aux flux d'air secondaire 20. L'angle d'inclinaison β entre les plans 254 d'ailettes et l'écoulement général de l'air peut être compris entre 30° et 60°. L'angle d'inclinaison β peut éventuellement être égal à 45°. De cela découle que les passages 246 comprennent des tronçons inclinés par rapport au sens général de l'écoulement de l'air au travers de la matrice 230. Cet agencement incite l'air à changer de tronçon à mesure qu'il circule, et à mieux refroidir les ailettes décalées.

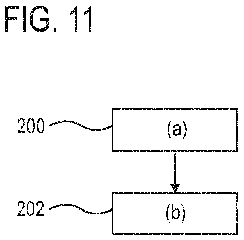

La figure 11 représente un diagramme d'un procédé de réalisation d'une matrice d'échangeur de chaleur. La matrice réalisée peut correspondre à celles décrites en relation avec les figures 4 à 10.

Le procédé peut comprendre les étapes suivantes, éventuellement réalisées dans l'ordre qui suit :
(a) conception 200 de la matrice de l'échangeur, la matrice comprenant un corps monobloc avec des ailettes successives ;
(b) réalisation 202 de la matrice par fabrication additive selon une direction d'impression qui est inclinée par rapport aux directions principales des ailettes ou de chaque ailette. Cette inclinaison peut être comprise entre 30° et 50°.

Selon le cas, la direction d'impression peut être inclinée par rapport aux tubes d'un angle compris entre 30° et 50°. Le cas échéant, la direction d'impression peut être sensiblement parallèle aux canaux, ou inclinée de moins 10°, ou de moins de 4°.

La fabrication additive peut être réalisée à partir de poudre, éventuellement en titane ou en aluminium. L'épaisseur des couches peut être comprise entre 20 µm et 50 µm, ce qui permet d'atteindre une épaisseur d'ailette de l'ordre de 0,35 mm, et des cloisons de 0,60 mm.

Les collecteurs peuvent être réalisés en tôles mécano-soudées, puis soudées aux extrémités de la matrice pour former un collecteur.

## Revendications

1. Système pour un aéronef, comprenant :
- un turboréacteur (2) muni d'un circuit hydraulique (30) de lubrification ; et/ou
- une pile à combustible (28) munie d'un circuit hydraulique (40) de mise et maintien en température de fonctionnement ;
**caractérisé en ce que** au moins l'un des circuits (30, 40) comprend une pompe électrique (50, 150, 250) de circulation d'huile intégrant un élément chauffant (51, 56, 57) pour chauffer l'huile.

2. Système selon la revendication 1 comprenant le turboréacteur (2) et la pile à combustible (28), le circuit de lubrification (30) du turboréacteur (2) et le circuit de mise et maintien en température (40) de la pile à combustible (28) formant un seul et même circuit (30, 40).

3. Système selon l'une des revendications 1 ou 2, **caractérisé en ce que** la pompe électrique (50, 150, 250) comprend un moteur électrique (55, 56) muni d'une bobine (56) et la bobine (56) est alimentée en courant continu afin de la faire chauffer, le courant continu étant préférablement au-dessus de la valeur nominale de fonctionnement de la bobine.

4. Système selon l'une des revendications 1 à 3, **caractérisé en ce que** la pompe (50, 150, 250) comprend un corps (51) et l'élément chauffant est une résistance électrique (57) noyée dans le corps (51) de la pompe (50, 150, 250) pour être en contact direct avec l'huile.

5. Système selon l'une des revendications 1 à 4, **caractérisé en ce que** le circuit (30, 40) qui comprend la pompe (50, 150, 250) comprend également un réservoir (60) pour l'huile, la pompe (150, 250) étant intégrée ou au contact direct du réservoir, de sorte que son élément chauffant (51, 56, 57) chauffe l'huile qui est dans le réservoir (60).

6. Système selon la revendication 5, **caractérisé en ce que** le réservoir (60), la pompe (50, 150, 250) et l'élément chauffant (51, 56, 57) composent un ensemble modulaire enveloppé d'un carter, le carter étant de forme apte à être introduit dans une cavité d'une aile d'aéronef.

7. Système selon l'une des revendications 5 ou 6, **caractérisé en ce qu'**au moins un des circuits (30, 40) comprend une bobine à proximité et/ou entourant le réservoir (60) dont les parois sont ferromagnétiques.

8. Système selon l'une des revendications 1 à 7, **caractérisé en ce que** le circuit de lubrification (30) du turboréacteur (2) comprend une portion qui forme un échangeur (34) avec l'air du bleed du turboréacteur pour réchauffer l'huile.

9. Système selon l'une des revendications 1 à 8, **caractérisé en ce que** le circuit de lubrification (30) du turboréacteur (2) comprend une portion qui forme un échangeur (34) avec l'air ambiant ou l'air by-pass du turboréacteur pour refroidir l'huile.

10. Système selon l'une des revendications 8 ou 9, **caractérisé en ce que** le circuit (30, 40) comprend des vannes et des pompes (50, 150, 250) et un système d'actionnement des vannes et pompes pour faire circuler l'huile dans l'un et/ou l'autre des échangeurs (34) en fonction d'une température d'huile mesurée et d'une température d'huile cible.

11. Procédé de gestion de l'huile dans un système pour aéronef, **caractérisé en ce que** le système est selon l'une des revendications 1 à 10, et **en ce que** la température de l'huile est mesurée et l'huile est réchauffée si sa température est en-dessous d'une première température seuil, notamment 20°C.

12. Procédé selon la revendication 11, **caractérisé en ce que** le besoin en énergie de l'aéronef ou du turboréacteur est évalué, et l'huile n'est réchauffée que si le besoin en énergie de l'aéronef est tel que la pile à combustible (28) doit être mise en fonctionnement.

13. Procédé selon l'une des revendications 11 ou 12, **caractérisé en ce que** l'huile est refroidie si sa température est au-dessus d'une seconde température seuil, notamment 150°C.

14. Procédé selon l'une des revendications 11 à 13, **caractérisé en ce que** la pompe électrique (50, 150, 250) comprend un moteur électrique (55, 56) muni d'une bobine (56) et la bobine (56) est alimentée en courant continu afin de la faire chauffer, le courant continu étant préférablement au-dessus de la valeur nominale de fonctionnement de la bobine.

15. Procédé selon la revendication 14, **caractérisé en ce que** la bobine (56) est alimentée avec un courant maintenu entre 110 et 150% de sa valeur nominale tant que l'huile est en-dessous de la première valeur seuil.

## Patentansprüche

1. Ein System für ein Flugzeug, das Folgendes umfasst:
- einem Turbotriebwerk (2) mit einem hydraulischen Schmiersystem (30); und/oder
- einer Brennstoffzelle (28) mit einem hydraulischen Kreislauf (40) zur Heizung und Aufrechterhaltung der Betriebstemperatur;
**dadurch gekennzeichnet, dass** mindestens einer der Kreisläufe (30, 40) eine elektrische Ölumlaufpumpe (50, 150, 250) umfasst, die ein Heizelement (51, 56, 57) zur Heizung des Öls enthält.

2. System nach Anspruch 1, das ein Turbotriebwerk (2) und eine Brennstoffzelle (28) umfasst, wobei der Schmierkreislauf (30) des Turbotriebwerks (2) und der Heiz- und Temperaturerhaltungskreislauf (40) der Brennstoffzelle (28) ein und denselben Kreislauf (30, 40) bilden.

3. System nach einem der Ansprüche 1 oder 2, **dadurch gekennzeichnet, dass** die Elektropumpe (50, 150, 250) einen mit einer Spule (56) ausgestatteten Elektromotor (55, 56) umfasst und die Spule (56) zur Beheizung mit Gleichstrom versorgt wird, wobei der Gleichstrom vorzugsweise oberhalb des Nennbetriebswertes der Spule liegt.

4. System nach einem der Ansprüche 1 bis 3, **dadurch gekennzeichnet, dass** die Pumpe (50, 150, 250) ein Gehäuse (51) umfasst und das Heizelement ein elektrischer Widerstand (57) ist, der in das Gehäuse (51) der Pumpe (50, 150, 250) eingebaut ist, um in direkten Kontakt mit dem Öl zu kommen.

5. System nach einem der Ansprüche 1 bis 4, **dadurch gekennzeichnet, dass** der Kreislauf (30, 40) mit der Pumpe (50, 150, 250) auch einen Öltank (60) umfasst, wobei die Pumpe (150, 250) in den Tank eingebaut ist oder in direktem Kontakt mit diesem steht, so dass ihr Heizelement (51, 56, 57) das Öl im Tank (60) erwärmt.

6. System nach Anspruch 5, **dadurch gekennzeichnet, dass** der Behälter (60), die Pumpe (50, 150, 250) und das Heizelement (51, 56, 57) eine modulare Einheit bilden, die in einem Gehäuse eingekapselt ist, wobei die Form des Gehäuses den Einbau in einen Hohlraum eines Flugzeugflügels ermöglicht.

7. System nach einem der Ansprüche 5 oder 6, **dadurch gekennzeichnet, dass** mindestens einer der Kreisläufe (30, 40) eine Spule umfasst, die in der Nähe und/oder rund um den Tank (60) eingebaut ist und deren Wände ferromagnetisch sind.

8. System nach einem der Ansprüche 1 bis 7, **dadurch gekennzeichnet, dass** der Schmierkreislauf (30) des Turbotriebwerks (2) einen Teil umfasst, der einen Wärmetauscher (34) mit der Spülluft des Turbotriebwerks bildet, um das Öl zu erhitzen.

9. System nach einem der Ansprüche 1 bis 8, **dadurch gekennzeichnet, dass** der Schmierkreislauf (30) des Turbotriebwerks (2) einen Teil umfasst, der einen Wärmetauscher (34) mit Umgebungsluft oder Bypass-Luft aus dem Turbotriebwerk zur Kühlung des Öls bildet.

10. System nach einem der Ansprüche 8 oder 9, **dadurch gekennzeichnet, dass** der Kreislauf (30, 40) Ventile und Pumpen (50, 150, 250) und ein Ventil- und Pumpenbetätigungssystem umfasst, um das Öl je nach einer gemessenen Öltemperatur und einer Soll-Öltemperatur durch den einen und/oder den anderen der Wärmetauscher (34) zu leiten.

11. Verfahren zur Steuerung des Öls in einem Flugzeugsystem, **dadurch gekennzeichnet, dass** das System einem der Ansprüche 1 bis 10 entspricht und dass die Öltemperatur gemessen wird und das Öl nachgeheizt wird, wenn seine Temperatur unter einen ersten Temperaturschwellenwert, nämlich 20°C, fällt.

12. Verfahren nach Anspruch 11, **dadurch gekennzeichnet, dass** der Energiebedarf des Flugzeugs oder des Turbotriebwerks ermittelt wird und das Öl nur dann nachgeheizt wird, wenn der Energiebedarf des Flugzeugs so hoch ist, dass die Brennstoffzelle (28) in Betrieb genommen werden muss.

13. Verfahren nach einem der Ansprüche 11 oder 12, **dadurch gekennzeichnet, dass** das Öl gekühlt wird, wenn seine Temperatur eine zweite Temperaturschwelle, nämlich 150°C, überschreitet.

14. Verfahren nach einem der Ansprüche 11 bis 13, **dadurch gekennzeichnet, dass** die Elektropumpe (50, 150, 250) einen Elektromotor (55, 56) umfasst, der mit einer Spule (56) ausgestattet ist, und dass die Spule (56) zur Heizung mit Gleichstrom versorgt wird, wobei der Gleichstrom vorzugsweise oberhalb des Nennbetriebswertes der Spule liegt.

15. Verfahren nach Anspruch 14, **dadurch gekennzeichnet, dass** die Spule (56) mit Strom versorgt wird, der zwischen 110 und 150 % ihres Nennwertes gehalten wird, solange die Öltemperatur unter dem ersten Schwellenwert liegt.

## Claims

1. System for an aircraft, comprising:
- a turbine engine (2) with a hydraulic lubrication circuit (30); and/or
- a fuel cell (28) with a hydraulic circuit (40) for setting and maintaining the operating temperature of the fuel cell;
**characterized in that** at least one of the circuits (30, 40) comprises an electric pump (50, 150, 250) for oil circulation and integrating a heating element (51, 56, 57) for heating the oil.

2. System according to claim 1, comprising the turbine engine (2) and the fuel cell (28), the hydraulic lubrication circuit (30) of the turbine engine (2) and the hydraulic circuit (40) for setting and maintaining the operating temperature of the fuel cell forming a unique and same circuit (30, 40).

3. System according to one of claims 1 and 2, **characterized in that** the electric pump (50, 150, 250) comprises an electric motor (55, 56) provided with a coil (56), and the coil (56) is fed with direct current for heating said coil, the direct current being preferably above the nominal functioning value of the coil.

4. System according to one of claims 1 to 3, **characterized in that** the pump (50, 150, 250) comprises a body (51) and the heating element is an electrical resistor (57) embedded in the body (51) of the pump (50, 150, 250) so as to be in contact with the oil.

5. System according to one of claims 1 to 4, **characterized in that** the circuit (30, 40) that comprises the pump (50, 150, 250) further comprises an oil tank (60) and the pump is embedded into the oil tank so that the heating element (51, 56, 57) heats the oil in the oil tank (60).

6. System according to claim 5, **characterized in that** the oil tank (60), the pump (50, 150, 250) and the heating element (51, 56, 57) form a modular assembly surrounded by a casing, the carter having a shape that allows it to be integrated in a cavity of a wing of an aircraft.

7. System according to one of claims 5 and 6, **characterized in that** at least one of the circuits (30, 40) comprises a coil next to and/or surrounding the oil tank (60) whose walls are ferromagnetic.

8. System according to one of claims 1 to 7, **characterized in that** the lubrication circuit (30) of the turbine engine (2) comprises a portion that forms a heat exchanger (34) with air of the bleed air system, to heat up the oil.

9. System according to one of claims 1 to 8, **characterized in that** the lubrication circuit (30) of the turbine engine (2) comprises a portion that forms a heat exchanger (34) with ambient air or air of the bleed air system, to cool down the oil.

10. System according to one of claims 8 or 9, **characterized in that** the circuit (30, 40) comprises valves and pumps (50, 150, 250) and an actuating system of the valves and pumps for circulating the oil in one and/or the other one of the exchangers (34) depending on a measured oil temperature and a target oil temperature.

11. Process for managing oil in a system for an aircraft, **characterized in that** the system is according to one of claims 1 to 10, and **in that** the oil temperature is measured and the oil is heated up if its temperature is below a first temperature threshold, notably 20°C.

12. Process according to claim 11, **characterized in that** the need in energy of the aircraft is evaluated and the oil is heated up only when the need in energy of the aircraft is such that the fuel cell (28) needs to be started.

13. Process according to one of claims 11 or 12, **characterized in that** the oil is cooled down is the temperature is above a second temperature threshold, notably 150°C.

14. Process according to one of claims 11 to 13, **characterized in that** the electric pump (50, 150, 250) comprises an electric motor (55, 56) equipped with a coil (56) and the coil (56) is fed with direct current in order to heat it up, the direct current being preferably above the nominal functioning value of the coil.

15. Process according to claim 14, **characterized in that** the coil (56) is fed with a direct current maintained between 110 and 150% of its nominal value as long as the oil is below the first threshold value.
